# EUROPEAN PATENT APPLICATION

(11) **EP 4 778 884 A1**
(43) Date of publication of application: **22.07.2026**
(21) Application number: 25152323.9
(22) Date of filing: 16.01.2025
(51) Int. Cl.: C01B 3/48, C01B 3/50, F25J 1/02

(54) **PROCESS AND APPARATUS FOR REMOVING CO2 FROM A GASIFICATION SYNGAS**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: DUBETTIER-GRENIER, Richard, 75007 Paris (FR); TRAN, Michael, 75007 Paris (FR); CAO, Jian-Wei, 75007 Paris (FR); SINGH, Aditya, 60388 Frankfurt (DE)
(74) Representative: Air Liquide

(57) **Abstract**

A unit for removing CO2 from a syngas comprises means (3) to remove acid gas from a syngas containing CO, H2S and carbonyl sulphide (COS) to eliminate at least most of H₂S, means (11) for heating purified syngas (9), a saturator (13) for moisturizing the heated syngas to produce heated and moisturized syngas, means for injecting steam (17) into the heated and moisturized syngas to form a mixture of steam and syngas, at least one shift reactor (17, 21) for subjecting the mixture (18) to water gas shift reaction means for cooling the shifted syngas to form cooled shifted syngas, an adsorption unit (31) for removing H2O and H2S from the cooled shifted syngas by adsorption in any order to produce dehydrated syngas, means for separating the dehydrated syngas (33) by partial condensation and/or distillation to form a H2 rich gaseous stream (51, 57) and CO2 rich liquid stream (44) and means for sending the H₂ rich gaseous stream as fuel to a gas turbine.

## Description

The present invention relates to a process and an apparatus for removing CO2 from a syngas, for example a gasification syngas produced by an IGCC

An **integrated gasification combined cycle (IGCC)** is a technology using a pressurized gasifier to turn coal or other carbon based fuels (such as heavy residues, heavy oil etc..) into pressurized gas called synthesis gas or syngas. It can then remove impurities from the syngas prior to the electricity generation cycle in a combined cycle including a gas turbine. Some of these pollutants, such as sulfur, can be turned into re-usable byproducts through the Claus process. This results in higher efficiency and lower emissions of sulfur dioxide, particulates and mercury,. With additional process equipment, a water-gas shift reaction can convert carbon monoxide into carbon dioxide. The resulting carbon dioxide from the shift reaction can be separated, compressed, and stored through sequestration. Excess heat from the primary combustion and shifted syngas fired generation is then passed to a steam cycle, similar to a combined cycle gas turbine.

The gasification process can produce syngas from a wide variety of carbon-containing feedstocks, such as high-sulfur coal, heavy petroleum residues, and biomass.

The plant is called "integrated" because
(1) the syngas produced in the gasification section is used as fuel for the gas turbine in the combined cycle and
(2) the steam produced by the syngas coolers in the gasification section is used by the steam turbine in the combined cycle.

The syngas produced may be used as fuel in a gas turbine which produces electrical power. In a normal combined cycle, so-called "waste heat" from the gas turbine exhaust is used in a Heat Recovery Steam Generator (HRSG) to make steam for the steam turbine cycle. An IGCC plant improves the overall process efficiency by adding the higher-temperature steam produced by the gasification process to the steam turbine cycle. This steam is then used in steam turbines to produce additional electrical power.

IGCC plants are advantageous in comparison to conventional coal power plants due to their high thermal efficiency, low non-carbon greenhouse gas emissions, and capability to process low grade coal. The disadvantages include higher capital and maintenance costs, and the amount of CO₂ released without pre-combustion capture.

One example of an IGCC process is as follows:
- The solid coal / heavy residue (possibly slurry) is gasified to produce syngas, or synthetic gas. Syngas is synthesized by gasifying coal in a closed pressurized reactor with a shortage of oxygen. The shortage of oxygen ensures that coal/heavy residue is broken down by the heat and pressure as opposed to burning completely. The chemical reaction produces a product that is a mixture of carbon and hydrogen, or syngas.

   CₓH_{y} + (x/2)O₂ → (x)CO + (y/2)H₂
- The heat from the production of syngas is used to produce steam from boiler feed water which is then used for steam turbine electricity production.

The syngas must go through a pre-combustion separation process to remove CO₂ contained in syngas and other impurities (e.g.; H₂S) to produce a more purified fuel..
- A water gas shift reaction may be added before or after this separation step, where the following reaction occurs :

   CO + H₂O → CO₂ + H₂**.**

This produces a syngas with a higher composition of hydrogen fuel which is more efficient for burning later in combustion.
- The resulting syngas fuels a combustion turbine that produces electricity. This high efficiency process for CO2 removal & shifting from a gasification synthesis gas produces a fuel to be used in the gas turbine of an or the Integrated Gasification Combined Cycle.

This type of pre-combustion removal of CO2 is generally preferred to post-combustion capturing solutions, since in post-combustion a huge volume of flue gas need to be treated making it cost inefficient.

The pre-combustion solution requires modifying/designing the gas turbine to accept an H₂ rich fuel.

For CO₂ capture, it is known to complement the acid gas removal process by physical solvent absorption ( dimethyl ethers of polyethylene glycol (=Selexol ^{®}) or Methanol (=Rectisol ^{®})) by a second stage of physical solvent absorption to selectively remove CO2.

Surprisingly, a low temperature CO₂ capture process using partial condensation and/or distillation can be more effective than a second stage CO2 capture added on top of the sulphur removal section of the acid gas removal unit - This becomes all the more attractive than CO2 can be produced at very high purity (for example 99.8+% mol CO2 (as opposed to typically max 98% mol for physical wash) and can be produced directly as liquid ready for transportation to CO2 storage site.

According to an object of the invention, there is provided a process for removing CO2 from a syngas comprising the following consecutive steps :
a) Remove acid gas from a syngas containing more than 30% mol CO on a dry basis and some H2S and carbonyl sulphide (COS) to eliminate at least most of H2S in a physical absorption unit to reach an H2S content in the purified syngas between 1 and 150 ppm, preferably between 10 and 50 ppm H2S
b) Optionally compress purified syngas to a pressure above 40 bar bas, preferably 50 bar abs or even 60 bar abs
c) Heat purified syngas and moisturize it in a saturator to produce heated and moisturized syngas having a water content of at least 30% H2O, and preferably at least 40% or even at least 50% water content
d) Inject some steam into the heated and moisturized syngas to reach a water content greater than 50%, and even preferably greater than 60% to form a mixture of steam and syngas
e) Subject the mixture to water gas shift reaction in at least one water gas shift unit at a temperature greater than 250°C, preferably greater than 300°C, possibly in two consecutive reactors, wherein more than 50% , preferably 70% or even 90% of COS in this mixture (typically in the range 1 to 50 ppm vol COS) still present in the shifted syngas is hydrolyzed to produce syngas containing H2S, wherein the CO₂ content on the shifted syngas containing H2S at the outlet of the water gas shift unit is greater than 30% mol and preferably > 35% mol on a dry basis while CO content is lower than 10% and preferably less than 5% or even less than 3% mol.
f) Cool down shifted syngas to form cooled shifted syngas
g) Remove H2O and H2S from the cooled shifted syngas by adsorption in an adsorption unit in any order to produce dehydrated syngas containing less than 20ppm H2S, preferably less than 5 pppm or even less than 1ppm H₂S
h) Partially condense in at least one partial condensation step and/or distil dehydrated syngas from step g) in a low temperature separation unit at a temperature lower than -20°C, preferably -40°C and preferably - 50°C or even -52°C
   to form a H₂ rich gaseous stream that is re-heated and send as fuel to a gas turbine and CO₂ rich liquid stream and
i) At least part of the refrigeration for the low temperature separation of step h being provided by re-vaporization of at least two CO₂ streams including a re-vaporization of a CO₂ stream at a pressure between 5 and 10 bar abs and/or by a CO₂ closed refrigeration cycle with re-vaporization of CO2 at at least two different pressures including one re-vaporization between 5 and 10 bar abs.

According to optional features of the invention:
- the dehydrated syngas is compressed to a pressure above 40 bar bas, preferably to between 50 bar abs and 60 bar abs.
- the dehydrated syngas is separated by a first stage of partial condensation to produce a first CO2 rich liquid stream and a hydrogen enriched gas, which gas is then compressed to between 50 and 60 bars and then separated by partial condensation and/or distillation to form a second CO2 rich liquid stream.
- The first CO2 rich liquid stream is sent to a distillation column which produces the second CO2 rich liquid stream, the first stream being less rich in CO2 than the second stream
- the dehydrated syngas is not compressed upstream of the first stage of partial condensation.
- at least part of the refrigeration for the low temperature separation of step h being provided by re-vaporization of at least three CO₂ streams including a re-vaporization of a CO₂ stream at a pressure between 10 and 20 bars.
- the only closed refrigeration cycle is the CO₂ cycle.
- all the refrigeration for the low temperature refrigeration of step h is provided by
- re-vaporization at a lower pressure of the at least two CO2 streams including a re-vaporization of a CO₂ stream at a pressure between 5 and 10 bar abs and/or
- by the CO2 closed refrigeration cycle with re-vaporization of CO2 at at least two different pressures including one re-vaporization between 5 and 10 bar abs. and additionally by
- Expansion of a hydrogen rich stream from step h, the pressure of the hydrogen rich stream before expansion being below 70 bar abs.
- the temperature of the wet syngas out of the saturator is between 120°C and 200°C, preferably between 130 and 180°C
- the molar quantity of imported steam, not generated in the shift unit, injected in the syngas before the shift unit is lower than the molar quantity of CO contained in the syngas to be shifted
- the shifted syngas from shift unit is used to heat up boiler feed water that will be contacted with syngas in saturator and/or to generate some steam that will be mixed with syngas upstream of the shift unit
- part of the heat from shifted syngas is used to generate LP/MP steam or hot water
- generated LP/MP steam or hot water is used in an absorption chiller to generate chilled water that is used to cool down syngas down to a temperature lower than 20°C, preferably 15°C or even 10°C before entering the adsorption unit.
- the adsorption unit used in step g) to remove residual H₂S uses at least one metal oxides as adsorbent.
- the adsorption unit used in step g) to remove residual H₂S is using molecular sieves and can be regenerated on site.
- the non condensed gas from a partial condensation of step h) is at least partially expanded in a turbine
- the turbine is driving a booster compressor compressing syngas to the pressure above 45 bar, preferably from 50 bar to 60 bar.
- the turbine discharge temperature is lower than -40°C and preferably between -45°C and - 55°C
- CO2 rich liquid from partial condensation is introduced in a column to be separated, the column operating at a pressure greater than 6 bar and preferably between 10 bar and 18 bar.
- Liquid from the bottom of the column is vaporised in a heat exchanger to provide reboil for column 41..
- Liquid from the bottom of the column is expanded to two different pressures and vaporised, one of the streams being at a pressure between 5 and 10 bars abs or between 5 and 7 bars abs. and preferably represents at least 30% of the CO2 vaporised to form a product
- Liquid from the bottom of the column is at above 7 bar, for example between 9 and 11 bars or between 10 and 20 bars abs and preferably represents the remaining at least 70% of the CO2 vaporised to form a product
- The top gas of the column is at a pressure below 70 bars abs
- at least part of the non condensed gas from one of the partial condensation steps of step h) is sent to a pressure swing adsorption unit, a tail gas from the PSA is compressed and is then sent back either at the inlet of the water gas shift section or at the inlet of the cryogenic section
- part of the non condensed gas from one of the partial condensation steps of step h) is heated and used as regeneration gas of the adsorption unit of step g).
- the regeneration gas containing water and/or H2S is routed to the gas turbine as a fuel without going through any adsorption step.

According to another object of the invention, there is provided an integrated process for production of energy from natural gas, solid fossil fuels or biomass, comprising the following steps: reacting natural gas in a reformer or reacting solid fossil fuels or biomass in a gasifier to form syngas, treating the syngas as described above to produce a CO2 stream and a CO2-depleted tail gas and sending
- the CO2 depleted gas and/or
- a hydrogen enriched stream formed by separating the CO2 depleted gas by pressure swing adsorption
- as a fuel to a gas turbine to produce energy.
- No low temperature shift steps are used
- The dehydrated syngas is condensed at a pressure above 50 bars abs
- The syngas is produced by an IGCC
- The gas turbine forms part of the IGCC
- The gas turbine includes a combustor fed by fuel
- The gas turbine is fed by a hydrogen enriched gas produced by the separation unit for the production of CO2 by partial condensation and/or distillation.

According to another object of the invention, there is provided
a unit for removing CO2 from a syngas comprising means to remove acid gas from a syngas containing more than 30% mol CO on a dry basis and some H2S and carbonyl sulphide (COS) to eliminate at least most of H2S in a physical absorption unit to reach an H₂S content in the purified syngas between 1 and 150 ppm, preferably between 10 and 50 ppm H₂S, optional compression means to compress purified syngas to a pressure above 40 bar bas, preferably 50 bar abs or even 60 bar abs, means for heating purified syngas, a saturator for moisturizing the heated syngas to produce heated and moisturized syngas, means for Injecting steam into the heated and moisturized syngas to form a mixture of steam and syngas, at least one shift reactor for subjecting the mixture to water gas shift reaction in at least one water gas shift unit at a temperature greater than 250°C, preferably greater than 300°C, possibly in two consecutive reactors, means for cooling the shifted syngas to form cooled shifted syngas, an adsorption unit for removing H2O and H2S from the cooled shifted syngas by adsorption in any order to produce dehydrated syngas containing less than 20ppm H₂S, preferably less than 5 pppm or even less than 1ppm H₂S, means for separating the dehydrated syngas by partial condensation and/or distillation to form a H2 rich gaseous stream and CO2 rich liquid stream, means for sending the H₂ rich gaseous stream as fuel to a gas turbine.

The invention will now be described in further detail with reference to the figures where Figure 1 shows a process according to the invention and Figures 2 and 3 show variants of this process..

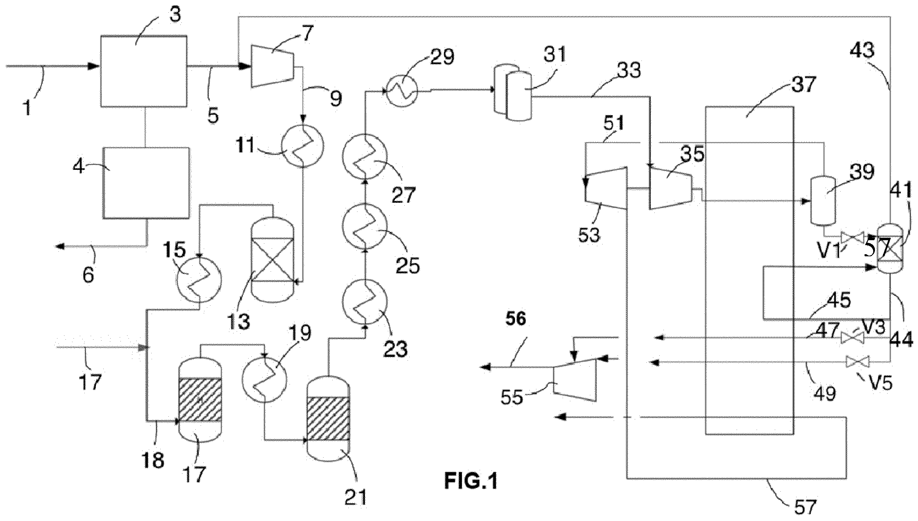

Figure 1 shows a process for removing CO2 from a syngas, preferably produced by gasification of a feedstock such as coal or a hydrocarbon, with a possible addition of natural gas. The syngas 1 contains more than 30% mol CO on a dry basis and some H2S (up to percent level depending on sulphur content of the IGCC feedstock) after syngas cooling and first cleaning steps. Acid gas is removed from the syngas 1 containing more than more than 30% mol CO on a dry basis to eliminate at least most of H2S in a physical absorption unit 3, such as Selexol ^{®} or Rectisol ^{®}, to reach an H2S content in the purified syngas 5 between 1 and 150 ppm, preferably 10 and 50 ppm H2S.

The purified syngas 5 may then already be at the required pressure or else can be compressed in compressor 7 to a pressure above 40 bar abs, preferably 50 bar abs or even 60 bar abs.
- The purified syngas 9 is heated in heater 11 and moisturized in a saturator 13 to produce heated and moisturized syngas having a water content of at least 30% H2O, and preferably at least 40% or even at least 50% water content; The purpose of moisturizing syngas is to provide necessary water for the reaction and moderate the exothermicity of the water gas shift reaction. The temperature of the wet syngas out of the saturator 13 is between 120°C and 200°C, preferably between 130 and 180°C.

This heated and moisturized syngas may be heated in heater 15.

Steam 17 is added to the heated and moisturized syngas to reach a water content > 50% mol, and even preferably > 60% mol. The molar quantity of imported steam 17 (which is not generated by heat recovery in the shift unit) injected in the syngas before the shift unit is lower than the molar quantity of CO contained in the syngas to be shifted

The gas is then subjected to a water gas shift reaction at a temperature > 250°C, preferably > 300°C, possibly in two consecutive reactors 17, 21 (because of the high exothermicity of the reaction), and the gas may be cooled in cooler 19 between reactors 17, 21. This type of water gas shift is known as high temperature shift.

At least 50% (preferably at least 70% or even at least 90%) of remaining COS (typically in the range 1 to 50 ppm vol COS) still present in the syngas is simultaneously hydrolyzed to give H₂S.

The CO2 content of the syngas at the outlet of Water gas shift unit 17, 19 is > 30% and preferably > 35% mol on a dry basis while CO content is lower than 10% and preferable 5% or even 3% mol.

The shifted syngas is cooled in coolers 23, 25, 27, 29 in series
- Exchanger 23 (fed by hot syngas at a temperature higher than 250°C and preferably 300°C) is used typically either to heat up syngas before water gas shift and/or to generate HP/IP steam or to heat up boiler feed water
- Exchanger 25 (fed by hot syngas at a temperature higher than 150°C and preferably 200°C) is used typically either to generate MP/LP steam or to produce hot water (or any liquid heat transfer fluid)
- Exchanger 27 further cools down syngas to a temperature close to ambient temperature (in the range 15 to 50°C)
- Exchanger 29 finally cools down syngas against chilled water to the lowest possible temperature in the range 5 to 20°C

Generated LP/MP steam or hot water generated in exchanger 25 can be used in an absorption chiller (LiBr for example) to generate chilled water that is used to cool down syngas in the exchanger 29 down to a temperature lower than 20°C, preferably 15°C or even 10°C before entering the driers of adsorption unit 31 (to remove water)

According to a first variant, the cooled syngas from coolers 23, 25, 27, 29 is purified in adsorption unit 31 to remove H₂O and possibly remaining H₂S from shifted syngas by adsorption. Either H₂O or H₂S can be removed first. Adsorption unit 31 uses typically metal oxides as adsorbent to remove residual H₂S without on site regeneration.

Alternatively, adsorption unit 31 uses molecular sieve to remove residual H2S and can be regenerated on site. In an optimized embodiment, this is a common unit using the same adsorbent for water removal and H2S removal , e.g. using '5A mol sieve', sufficient volume in excess being installed to allow for H2S removal after water has been adsorbed in spite of the CO2 co adsorption phenomenon.

The purified syngas 33 is compressed in compressor 35 to a pressure above 40 bar abs, preferably 50 or even 60 bar abs and cooled in exchanger 37. The syngas is then separated in a low temperature separation unit by partial condensation and/or by distillation. In the illustrated example, the syngas is first partially condensed at a temperature lower than -20°C, preferably -40°C and preferably - 50°C or even -53°C. The partially condensed stream is separated in separator 39 to form an H2 rich gaseous stream 51 that is re-heated in exchanger 37 and CO2 rich liquid stream which is expanded in valve V1.

The CO2 rich stream is sent to the top of a distillation column 41 where it separates to form a gas 43 containing mainly hydrogen (with some residual CO, CH4 and some CO2) and a liquid 44 which is purified CO2. In this configuration, column 41 is preferably at a pressure greater than 6 bar and preferably at between 10 and 18 bars, for example 10 bar or 15 bar.

Part 45 of liquid 44 is vaporised in exchanger 37 to provide reboil for column 41. The rest is divided into two streams 47, 49 which are expanded in valves V3, V5 respectively so that at least one of the streams is at a pressure between 5 and 10 bars abs. The streams 47, 49 are then vaporised providing part of the refrigeration of the cold process. Preferably, stream 49 is vaporised at between 5 and 10 bars abs, or between 5 and 7 bars abs and represents at least 30% of the CO2 vaporised to form a product. Preferably stream 47 is vaporised at above 7 bar, for example between 9 and 11 bars and represents the remaining at least 70% of the CO2 vaporised to form a product.

Following vaporization, both gases 47, 49 are compressed in compressor 55 to form a product CO2 gas 56 at greater than 7 bars.

Hydrogen rich gas 51 is expanded in turbine 53 from a pressure lower than 70 bar abs down to a temperature of lower than -40°C and preferably - 50°C and so provides refrigeration to exchanger 37. After warming in the heat exchanger 37, the hydrogen rich gas 57 is sent ultimately as fuel to a gas turbine (not shown) in the IGCC.

The turbine 53 drives compressor 35 if present. If this turbine is not present, the vaporization of CO2 streams 47, 49 provides all the refrigeration required for the cold process, ignoring JT expansion in valves V1, V3, V5.

According to a second variant, compressor 35 is not present but the gas 33 is cooled in heat exchanger 37 at the outlet pressure of the adsorption unit 31 and partially condensed in exchanger 37. The partially condensed gas is separated in a phase separator and the hydrogen rich gas formed is further compressed to a pressure above 50 bar or even 60 bar, and is then cooled down and partially condensed to recover part of the contained CO2.

Part of first and/or second H2 rich stream 51 can treated in an H2 purification unit including at least a PSA unit to produce a pure H2 stream (having a purity of H2 > 99.9% mol H2, preferably greater than 99.99% mol H2)

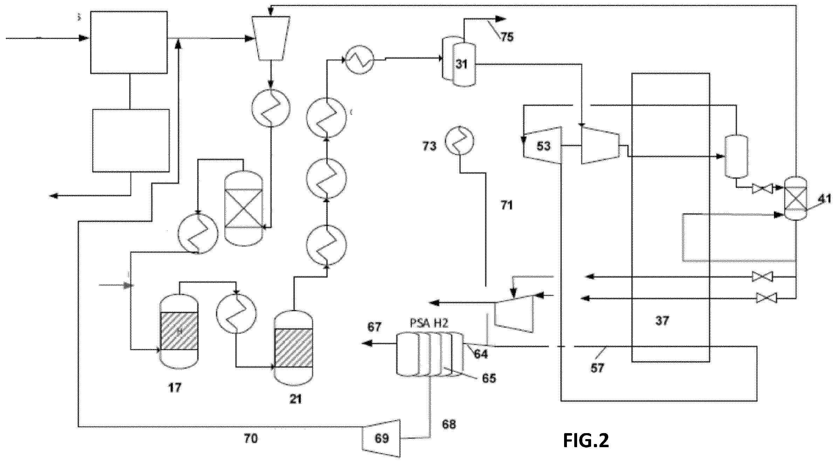

As shown in FIG.2, at least part 64 of the H2 rich non condensed gas 57 from a phase separator of the first or second variant (e.g. separator 39) can be sent to a PSA 65 to form a hydrogen product 67. Tail gas 68 from the PSA 65, containing less hydrogen than gas 64) can be compressed to a pressure similar to that of syngas in compressor 69 and is then sent back to shift unit 17, 21 to be treated or to the low temperature separation unit 39, 41, without passing through the shift step, to be partially condensed (after being possibly mixed with dry or wet (and potentially shifted) syngas 18, 33.

Part 71 of the first and/or second H2 rich stream 57 can be heated by heater 73 and used as regeneration gas of the adsorption unit 31 (and possibly H2S removal unit). The regeneration gas 75 taken downstream of the adsorption unit 31 can be sent as fuel to the gas turbine of the IGCC.

As an alternative, when CO2 specification allows it, the distillation column described above can be removed,

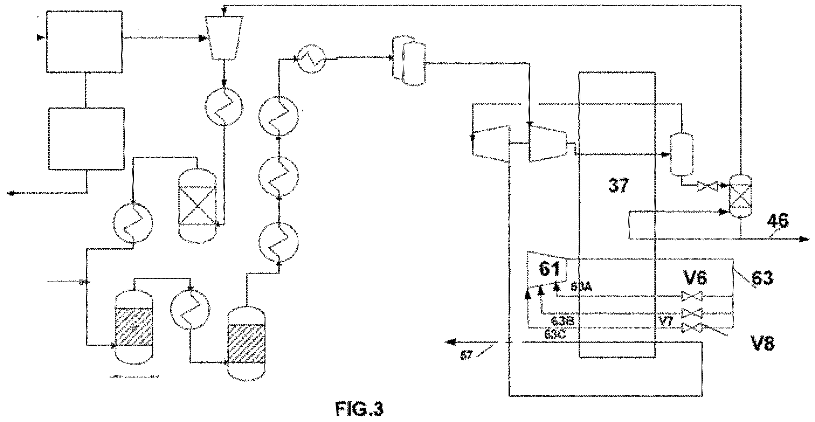

Alternatively or additionally, for example if the CO2 is produced in liquid form 46, as shown in FIG.3, at least part of the refrigeration is produced by a closed CO2 refrigeration cycle with re-vaporization of CO2 at at least two different pressures including one re-vaporization between 5 and 10 bar abs. A cycle compressor 61 compresses streams 63A, 63B and 63C which vaporise at different pressures due to expansion in valves V6, V7, V9, the CO2 from compressor 61 liquefies in exchanger 37 forming liquid 63 which is then divided in at least two portions (here three portions), forming a closed refrigeration cycle.

Preferably, no external refrigeration cycle such as propane, ethane or ammonia is used.

## Claims

1. Process for removing CO2 from a syngas comprising the following consecutive steps :
a) Remove acid gas from a syngas (1) containing more than 30% mol CO on a dry basis and some H2S and carbonyl sulphide (COS) to eliminate at least most of H2S in a physical absorption unit to reach an H2S content in the purified syngas between 1 and 150 ppm, preferably between 10 and 50 ppm H2S
b) Optionally compress purified syngas (5) to a pressure above 40 bar bas, preferably 50 bar abs or even 60 bar abs
c) Heat purified syngas (9) and moisturize it in a saturator (13) to produce heated and moisturized syngas having a water content of at least 30% H2O, and preferably at least 40% or even at least 50% water content
d) Inject some steam (17) into the heated and moisturized syngas to reach a water content greater than 50%, and even preferably greater than 60% to form a mixture of steam and syngas
e) Subject the mixture to water gas shift reaction in at least one water gas shift unit (17, 21) at a temperature greater than 250°C, preferably greater than 300°C, possibly in two consecutive reactors, wherein more than 50% , preferably 70% or even 90% of COS in this mixture (typically in the range 1 to 50 ppm vol COS) still present in the shifted syngas is hydrolyzed to produce syngas containing H2S, wherein the CO2 content on the shifted syngas containing H2S at the outlet of the water gas shift unit is greater than 30% mol and preferably > 35% mol on a dry basis while CO content is lower than 10% and preferably less than 5% or even less than 3% mol.
f) Cool down shifted syngas to form cooled shifted syngas
g) Remove H2O and H2S from the cooled shifted syngas by adsorption in an adsorption unit (31) in any order to produce dehydrated syngas (33) containing less than 20ppm H₂S, preferably less than 5 ppm or even less than 1ppm H₂S
h) Partially condense in at least one partial condensation step and/or distil dehydrated syngas from step g) in a low temperature separation unit at a temperature lower than -20°C, preferably -40°C and preferably - 50°C or even -52°C to form a H2 rich gaseous stream (51) that is re-heated and send as fuel to a gas turbine and CO2 rich liquid stream (44) and
i) At least part of the refrigeration for the low temperature separation of step h being provided by re-vaporization of at least two CO2 streams including a re-vaporization of a CO2 stream (47) at a pressure between 5 and 10 bar abs and/or by a CO2 closed refrigeration cycle (61,63) with re-vaporization of CO2 at at least two different pressures including one re-vaporization between 5 and 10 bar abs.

2. Process according to Claim 1 wherein the dehydrated syngas (5) is compressed to a pressure above 40 bar bas, preferably to between 50 bar abs and 60 bar abs.

3. Process according to Claim 1 wherein the dehydrated syngas (33) is separated by a first stage of partial condensation to produce a first CO₂ rich liquid stream and a hydrogen enriched gas, which gas is then compressed to between 50 and 60 bars and then separated by partial condensation and/or distillation to form a second CO₂ rich liquid stream.

4. Process according to Claim 3 wherein the dehydrated syngas is not compressed upstream of the first stage of partial condensation.

5. Process according to any preceding claim wherein at least part of the refrigeration for the low temperature separation of step h being provided by re-vaporization of at least three CO₂ streams including a re-vaporization of a CO₂ stream at a pressure between 10 and 20 bars.

6. Process according to any preceding claim wherein the only closed refrigeration cycle is the CO₂ cycle (63, 61).

7. Process according to any preceding claim wherein all the refrigeration for the low temperature refrigeration of step h is provided by
i) re-vaporization at a lower pressure of the at least two CO₂ streams including a re-vaporization of a CO₂ stream at a pressure between 5 and 10 bar abs and/or
ii) by the CO₂ closed refrigeration cycle (61;63) with re-vaporization of CO₂ at at least two different pressures including one re-vaporization between 5 and 10 bar abs. and additionally by
iii) Expansion of a hydrogen rich stream (51) from step h, the pressure of the hydrogen rich stream (51) before expansion being below 70 bar abs.

8. Process according to one of the previous claims where the molar quantity of imported steam (17), not generated in the shift unit, injected in the syngas (18) before the shift unit is lower than the molar quantity of CO contained in the syngas to be shifted

9. Process according to one of the previous claims where the shifted syngas from shift unit is used to heat up boiler feed water that will be contacted with syngas in saturator and/or to generate some steam that will be mixed with syngas upstream of the shift unit

10. Process according to one of the previous claims where part of the heat from shifted syngas is used to generate LP/MP steam or hot water.

11. Process according to the previous claim where generated LP/MP steam or hot water is used in an absorption chiller to generate chilled water that is used to cool down syngas down to a temperature lower than 20°C, preferably 15°C or even 10°C before entering the adsorption unit.

12. Process according to Claim 10 or a previous claim dependent on Claim 10 where part (71) of the non condensed gas (51, 57) from one of the partial condensation steps of step h) is heated and used as regeneration gas of the adsorption unit of step g).

13. Process according to previous claim where the regeneration gas (75) containing water and/or H2S is routed to the gas turbine as a fuel without going through any adsorption step.

14. Integrated process for production of energy from natural gas, solid fossil fuels or biomass, comprising the following steps: reacting natural gas in a reformer or reacting solid fossil fuels or biomass in a gasifier to form syngas (1), treating the syngas as claimed in any preceding claim to produce a CO2 stream and a CO2-depleted tail gas (51,56,57) and sending
i) the CO2 depleted tail gas and/or
ii) a hydrogen enriched stream (67) formed by separating the CO2 depleted gas (64) by pressure swing adsorption (65)
as a fuel to a gas turbine to produce energy.

15. Unit for removing CO2 from a syngas comprising means to remove acid gas from a syngas containing more than 30% mol CO on a dry basis and some H2S and carbonyl sulphide (COS) to eliminate at least most of H2S in a physical absorption unit (3) to reach an H₂S content in the purified syngas between 1 and 150 ppm, preferably between 10 and 50 ppm H₂S, optional compression means (7) to compress purified syngas to a pressure above 40 bar bas, preferably 50 bar abs or even 60 bar abs, means for heating purified syngas (11), a saturator (13) for moisturizing the heated syngas to produce heated and moisturized syngas, means for Injecting steam (17) into the heated and moisturized syngas to form a mixture of steam and syngas, at least one shift reactor (17, 21) for subjecting the mixture (18) to water gas shift reaction in at least one water gas shift unit at a temperature greater than 250°C, preferably greater than 300°C, possibly in two consecutive reactors, means for cooling the shifted syngas to form cooled shifted syngas, an adsorption unit (31) for removing H2O and H2S from the cooled shifted syngas by adsorption in any order to produce dehydrated syngas containing less than 20ppm H₂S, preferably less than 5 ppm or even less than 1ppm H₂S, means for separating the dehydrated syngas (33) by partial condensation and/or distillation to form a H2 rich gaseous stream (51, 57) and CO2 rich liquid stream (44) and means for sending the H₂ rich gaseous stream as fuel to a gas turbine.
